Europäisches Patentamt

European Patent Office

Office européen des brevets

(11) Publication number: **0 291 595**
**A1**

## (12) EUROPEAN PATENT APPLICATION

(21) Application number: **87304530.6**

(22) Date of filing: **21.05.87**

(51) Int. Cl.⁴: **A01K 11/00 , A01K 13/00**

(43) Date of publication of application:
**23.11.88 Bulletin 88/47**

(84) Designated Contracting States:
**DE FR GB IT**

(71) Applicant: **An-Tech International Livestock
Products Inc.
301 West Osborn Road
Phoenix Arizona 85013-3928(US)**

(72) Inventor: **Howe, Steve Randall
5340 West Caron
Chandler Arizona 85302(US)**
Inventor: **Shores, John Wallace
10202 North 51st Drive
Glendale Arizona 85302(US)**
Inventor: **Warner, William Bradley
2338 West Rockwell Court
Chandler Arizona 85302(US)**

(74) Representative: **Smith, Norman Ian et al
F.J. CLEVELAND & COMPANY 40-43
Chancery Lane
London WC2A 1JQ(GB)**

(54) Container for attachment to animal ear tags.

(57) An improvement for use with a conventional ear identification tag of the two-part type where a "button" (16) is inserted through the ear of the animal to engage a "boss" (12) from which a depending identification tag (10) is attached comprises a press-fit retaining ring (31) attached to a hollow housing (29) for attachment over the boss of the ear identification tag. The housing may be used to house and dispense insecticide, insect repellents, drugs and the like, or it may be used to house a miniature radio transmitter or transceiver of the type frequently worn by animals, such as dairy cattle. The housing and/or the attachment means may be made of frangible material to permit quick removal when the material in the housing is used up or no longer is necessary, or where replacement with a new housing filled with insecticide, insect repellent, drugs, or the like is desired.

FIG. 5

## CONTAINER FOR ATTACHMENT TO ANIMAL EAR TAGS

Background

Identification animal ear tags for cattle, hogs and the like are in widespread use. The most popular forms of these tags comprise two components formed of plastic or similar resilient material. A first component has a back-up button with a spike of hard plastic material projecting from its center. The second component, which generally carries the identification indicia, has a boss with a hole in it for receiving the spike after it is pressed through the ear of the animal. The spike then is seated in the boss to secure the ear tag to the animal's ear. Typically, such tags are made in different colors to provide identifying information concerning the animal wearing a tag of a particular color. In addition, numbers or letters or other indicia are provided on the tags to permit accurate identification of each particular animal in a herd.

As ear identification tags for animals are increasingly used, various techniques also have been devised for using such tags to release insecticides, insect repellent or animal repellents, either through separately applied tags or by adding a carrier of some type to the identification ear tag.

One concept for combining an identification feature and an insecticide feature is disclosed in the patent to Pitchey #4,184,453. In Ritchey, the tag itself is made of a material impregnated with an insecticide which bleeds out over a period of time to provide control over flies and other insects that may come near the animal's ear. The problem with the use of an impregnated identification tag is that within a relatively short period of time the insecticide is used up. If continued insect control is desired, the ear tag itself must be removed and replaced with a new tag. This is time consuming and requires the formation of another hole in the animal's ear to reapply a new identification/insecticide tag.

Some other approaches to combining the functions of identification and insect control without the necessity of replacing the identification tag when the insecticide needs replacing and disclosed in the patents to Furer #4,059,074; Hair #4,506,630; Akhavein #4,495,898 and #4,366,777; Steckel #4,428,327; and Meeks #3,949,708. In the Furer patent a separate disc made of a carrier impregnated with insecticide is made to slide over the pin of the ear tag. When the insecticide is used up, the disc must be pulled off the pin (by aligning a slot in it with the pin), and then a new disc may be placed over the pin. This is a cumbersome operation. The Akhaven patents disclose insecticide carriers which are wrapped around a portion of the tag to fasten upon themselves. Removal and installation of these carriers is cumbersome.

The Meeks, Steckel and Hair patents all are directed to replenishable insecticide devices for use with ear tags, but the tags themselves are of special construction to accommodate the different insecticide dispensers disclosed in these patents.

Another prior art approach to providing insect control for animals has been to utilize an insect dispenser which is separate from any identification tag and which also is applied to the ear of the animal. A variety of different techniques for accomplishing such insect control are disclosed in the patents to Goodwin #4,023,532; Hair et al #3,942,480; Goodwin #3,935,839; Ohlhausen #3,756,200; Gerhardi #3,405,688; Child #4,425,874; and Ritchey #RE 31,940. All of the patents of this group are directed to devices for dispensing insecticide at the ear of the animal. Some of the devices are attached to the ear by piercing the ear in a manner similar to the technique used for attaching identification tags. Others of the devices are placed inside the ear or are wrapped around a portion of the ear. In all cases, the dispensers are somewhat cumbersome and difficult to replace when the supply of insecticide must be replenished.

Accordingly, it is desirable to provide a container which may be used in conjunction with insecticides, insect repellents or other materials, and which may be used in conjunction with a standard unmodified ear identification tag. It further is desirable to provide such a container which is easy to apply and which is readily replaceable without requiring any additional holes in the animal's ear.

Summary of the Invention:

Accordingly it is an object of this invention to provide a container which is attached to a conventional animal ear identification tag.

It is another object of this invention to provide a container which attaches to the boss of a conventional animal ear identification tag.

It is an additional object of this invention to provide a container for attachment to a conventional animal ear tag which is easy to apply and to remove.

It is a further object of this invention to provide an improved liquid or solid dispensing container for use in conjunction with conventional ear identification tags.

It is an additional object of this invention to provide an improved easy-to-apply and easy-to-remove container for attachment to the boss of an unmodified conventional animal ear identification tag.

In accordance with a preferred embodiment of this invention, a container has been developed for use with an animal ear identification tag. A standard animal ear identification tag has at least two parts, comprising a backing portion with an elongated spike for passing through the ear of the animal and a tag portion having a hollow boss for receiving and holding the spike after passage of the spike through the animal's ear. An attachment device for the container is placed over and in engagement with the boss of the ear tag portion of the identification tag; so that the attachment device is secured to the boss. A housing is coupled to the attachment device. This housing may be used to hold insecticide, insect repellent, drugs or other devices as desired.

Brief Description of the Drawing:

Figure 1 is a front perspective view of a preferred embodiment of the invention;

Figure 2 is a cross-sectional view of a portion of the embodiment shown in Figure 1;

Figure 3 is a rear perspective detail view of a variation of the embodiment shown in Figure 1;

Figure 4 is a cross-sectional view taken along the line 4-4 of Figure 3;

Figure 5 is an exploded perspective view of the manner of application of another preferred embodiment of the invention;

Figure 6 is an exploded view of the embodiment shown in Figure 5; and

Figure 7 is a cross-sectional view of the embodiment shown in Figures 5 and 6 illustrating the manner of use.

Detailed Description:

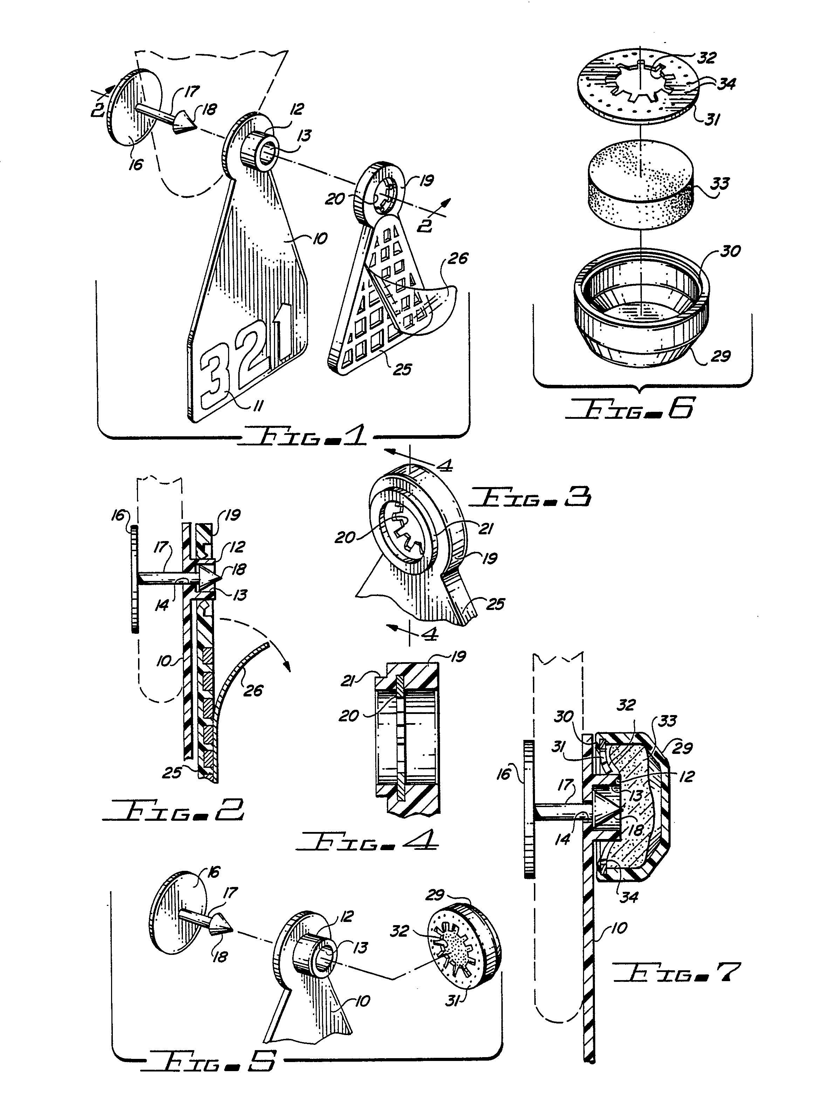

Reference now should be made to the drawing in which the same reference nubmers are used throughout the different figures to designate the same or similar components. Two embodiments are illustrated in the drawing. The first of these embodiments is shown in Figures 1 through 4.

In the embodiment illustrated in Figures 1 through 4, a conventional two-piece livestock identification ear tag 10 of the type which is commonly used to provide an identification number 11 (or other useful indicia) is illustrated. On its upper end, such a conventional tag 10 has a circular boss 12 with an internal enlarged opening 13 at its outer or right-hand end as viewed in Figure 1. This opening 13 communicates with a smaller opening 14 (best seen in Figure 2) which passes through the main body portion 10 of the ear tag. To attach this conventional tag 10 to the ear of an animal, an attachment button 16 having an elongated shaft 17 terminating in a flared, pointed tip 18 is passed through the ear of the animal and through the hole 14 to seat the tip 18 in the opening 13 of the boss 12. This is illustrated in Figure 2, which shows the ear of the animal in dotted lines.

The structure which has been described thus far is a conventional widely used livestock identification ear tag. Normally such a tag simply provides the function of identifying the animal, much in the manner of a brand, and for a particular herd by providing the animal with a specific identification numer such as illustrated in Figure 1. To this tag, an insecticide dispensing container 25 is attached to the boss 12 by pressing a ring 19 at the upper end of the container 25 over the boss so that the an internally toothed locking washer portion 20 tightly grips the outer edge of the boss 12 as illustrated most clearly in Figure 2.

The container portion 25 includes a number of waffle-like indentations which may be filled with an insecticide, insect repellent, medication, or the like and then covered over with a thin plastic sealing sheet 26. The material which is placed in the indentations in the body 25 and the material of the body 25 of the container are selected to be such that the material in the various chambers slowly passes through or oozes through the material of the body 25 and the sealing sheet 26 to dispense from the container 25 onto the ear tag 10. In the normal course of the movements of an animal wearing the ear tag 10, the insecticide or other material which is passed out of the container 25 onto the ear tag 10 is rubbed off onto the animal wearing the tag or onto another animal with which the tagged animal comes into contact. To continuously dispense the insecticide so that it may serve its intended purpose.

When the insecticide which has been placed in the waffle-like indentations of the container 25 is used up, the container 25 may be removed from the boss 12 of the ear tag 10 and thrown away. The a new container 25 may be placed on the boss 12 to continue dispensing insecticide without requiring any removal or modification whatsoever of the conventional ear tag 10.

As illustrated in Figures 1 and 2, the inner toothed portion or locking washer portion 20 of the device is integrally formed from the same material as the main body portion 25. Ideally however, the body portion 25 should be somewhat flexible; whereas, for maximum holding ability, the locking washer teeth 20 should be made of relatively rigid material. Consequently, a modified construction as illustrated in Figures 3 and 4 is preferred. In this construction the locking washer 20 is a separate part held in place in the upper end 19 of the container 25 in an internal groove, which is spaced inwardly by means of a shoulder portion 21. When this structure is utilized, the upper portion 19 and the main body portion of the container 25 may be made of a relatively flexible "rubber-like" plastic and the locking ring 20 may be made of a rigid plastic or of metal. Since the boss 12 of conventional cattle ear tags also is made of a relatively flexible plastic, the use of rigid plastic or metal for the locking ring 20 causes the teeth on the locking ring 20 to tightly grip the boss 12; so that accidental removal of the container 25 from the ear tag 10 is much less likely than with the embodiment which was described in conjunction with Figures 1 and 2.

When removal of a container 25 using a separate retaining ring 20 of the type shown in Figures 3 and 4 if desired, this most readily is accomplished by squeezing the upper portion 19 of the body 25 with a pair of pliers. If a brittle or frangible plastic insert 20 is used it will shatter. If a metal locking washer is used it will be badly distorted to permit easy removal of the used container 25. Replacement with a new container 25 then is accomplished simply by pressing the locking ring 20 of the new container over the boss 12 in the manner described previously.

Another embodiment of the invention is illustrated in Figures 5 through 7. In this embodiment, the same ear tag structure 10 is illustrated. Instead of using a dangling type of container or housing 25, however, of the type used in Figures 1 through 4, a "button-like" housing container 29 is employed and is carried directly over the boss 12 of the ear tag 10. The housing 29 is closed at its open end by a locking washer 31 with internally formed teeth 32. The washer 31 is similar to the locking washer or locking member 20 of Figures 1 through 4. The locking washer 31 fits inside a groove 30 in the open end of the container 29 which faces the ear tag 10 when the assembly is placed over the boss 12.

In use, the embodiment showon in Figures 5 through 7 has a felt disc or sponge insert 33 saturated with liquid insecticide, insect repellent, or other liquid or solid first placed in the container 29. After the saturated felt or sponge insert 33 is placed in the container 29, a rigid plastic (or metal) locking washer 31 is pressed to fit in the groove 30. This holds the insert 33 in place and generally seals off the open end of the container 29. A number of small holes 34, however, are provided in the locking washer 31; and, obviously some spaces also exist between the adjacent teeth 32 of the locking washer 31.

The container 29, with the locking washer 31 pressed in place behind the lip of the groove 30, is pressed onto the boss 12 as illustrated in Figure 7. This causes a distortion of the teeth 32 of the locking washer 31 to firmly hold the locking washer in place and therefore hold the container 29 in place on the boss 12 of the ear tag 10. The liquid in the saturated felt washer 33 then oozes through the holes 34 and the spaces between the adjacent teeth 32 onto the ear tag 10, from which it passes onto the animal in the manner described previously to accomplish its desired purpose. If a powdered solid insecticide or medicine is placed in the container 29, the powder drops through the holes 34 and spaces between the teeth 32 onto the ear tag 10.

As in the case of the embodiment illustrated in Figures 3 and 4, removal of the container 29 is accomplished by squeezing it with a pair of pliers to crush the locking washer/ring 31. Once this has been accomplished, the button-like housing 29 falls away or easily may be pulled off the boss 12; so that it can be replaced with a fresh housing 29 if desired.

Although the foregoing description has been directed to containers for dispensing insecticides, the container of the embodiment shown in Figures 5 through 7 also could be used to hold other materials such as identification transponders, anthelmintics, externally applied medications, radio transmitters/receivers and the like. The particular type of material which is held in the housing container 29 is not important; although the container 29 most likely will be used primarily to dispense insecticides and liquid medications. The ability to dispense insecticides permits high insecticide loading compared to conventional tags of the monolithic type where the high polymer to insecticide ratios of such monolithic tags make the uses of most toxicants impractical.

Although different embodiments of the invention have been illustrated in the various figures of the drawings, these embodiments are to be considered as illustrative of the invention and not as limiting. Various changes and modifications will occur to those skilled in the art without departing from the true scope of the invention as defined by the claims.

## Claims

1. For use with an animal ear identification tag having at least two parts comprising a backing portion (16) with an elongated spike (17) for passing through the ear of the animal and a tag portion (10) with a hollow boss (12) for receiving and holding the spike after passage of the same through the ear of the animal, a container characterized by:

a hollow housing (29) with an attachment ring (31) made of frangible material for press fit frictional engagement with the boss (12) of the tag portion (10) to permit relatively easy placement over the boss (12) whereby the attachment ring (31) is secured to the boss (12) and the attachment ring (31) is structured to break upon removal from the boss (12).

2. The container according to Claim 1 further characterized in that the ring (31) is a retaining ring.

3. The container according to Claim 1 further characterized in that the attachment ring (31) and at least a portion of the housing (19) are integrally formed as a single part.

4. The container according to Claim 1 further characterized in that the housing (25) extends downwardly from the attachment ring (20) overlie a portion of the tag portion (10) of the ear identification tag.

5. The container according to Claim 1 further characterized in that a liquid absorbent insert (33) impregnated with liquid is placed in the housing (29) for controlling the flow of fluid therefrom through openings (34) in the attachment ring over a prolonged period of time.

6. For use with an animal ear identification tag having at least two parts comprising a backing portion (16) with an elongated spike (17) for passing through the ear of the animal and a tag portion (10) with a hollow boss (12) for receiving and hollow boss (12) for receiving and holding said spike after passage of the same through the ear of the animal, a container characterized by:

a hollow housing (29) with a retaining ring (31) having openings (34) to permit the passage of fluid and solid materials therethrough for placement over and in engagement with the boss (12) of the tag portion (10) to secure the retaining ring (31) to the boss (10).

7. The combination according to Claim 6 wherein said materials are insecticides.

8. The combination according to Claim 6 wherein said materials are insect repellents.

9. The container (33) according to Claim 6 further characterized by a liquid absorbent insert (33) impregnated wtih liquid placed in the housing (20) for controlling the flow of liquid therefrom through the openings (34) in the retaining ring (31) over a prolonged period of time.

10. The container according to Claim 6 further characterized in that the housing (25) extends downwardly from the attachment ring (20) to overlie a portion of the tag portion (10) of the ear identification tag.

FIG-1

FIG-6

FIG-3

FIG-2

FIG-4

FIG-7

FIG-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 550 915 (CHEVILLOT)<br>* Figures 1-3; page 4, lines 17-33; page 6, lines 4-7 * | 1 | A 01 K 11/00<br>A 01 K 13/00 |
| A | | 6 | |
| Y | NL-A-8 102 068 (BRON)<br>* Figure 1; page 2, line 35 - page 3, line 7; page 3, line 27 - page 4, line 28; page 5, lines 11-14 * | 1 | |
| A | FR-A-2 442 583 (VILLA-MASSONE)<br>* Figures 1-4; page 1, line 38 - page 3, line 4; page 4, lines 12-26 * | 1-3 | |
| A | FR-A-2 132 891 (TOUGH SOFTY TAG)<br>* Figures 1-3; page 5, lines 12,13 * | 4,10 | |
| A | EP-A-0 212 885 (STERIMATIC)<br>* Figures 1,2; page 3, line 21 - page 4, line 3 * | 6-8 | |
| | | | TECHNICAL FIELDS SEARCHED (Int. Cl.4)<br><br>A 01 K |

The present search report has been drawn up for all claims

| Place of search | Date of completion of the search | Examiner |
|---|---|---|
| THE HAGUE | 12-01-1988 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                         

& : member of the same patent family, corresponding document

EPO FORM 1503 03.82 (P0401)